(19) Europäisches Patentamt
European Patent Office
Office européen des brevets

(11) **EP 3 156 212 A1**

(12) **EUROPÄISCHE PATENTANMELDUNG**

(43) Veröffentlichungstag:
**19.04.2017 Patentblatt 2017/16**

(21) Anmeldenummer: **15190210.3**

(22) Anmeldetag: **16.10.2015**

(51) Int Cl.:
*B29C 65/00* (2006.01)    *C08J 5/12* (2006.01)
*B29K 23/00* (2006.01)    *B29K 67/00* (2006.01)
*B29K 77/00* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Henkel AG & Co. KGaA**
**40589 Düsseldorf (DE)**

(72) Erfinder:
• WALTER, Pablo
  80801 München (DE)
• FRIEDRICH, Norman
  80636 München (DE)
• GONZALEZ, Lina
  82008 München (DE)
• LÜTZEN, Hendrik
  80637 München (DE)
• HÄRTIG, Thomas
  80796 München (DE)
• KASPER, Dirk
  40597 Düsseldorf (DE)

(54) **VERFAHREN ZUM SCHWEISSEN EINES POLYOLEFIN-KUNSTSTOFFES MIT EINEM KUNSTSTOFF BASIEREND AUF EINEM CARBONYLGRUPPEN ENTHALTENDEN POLYMER**

(57) Die vorliegende Erfindung bezieht sich auf ein Verfahren zum Verschweißen von einem Polyolefin-Kunststoff mit einem Kunststoff basierend auf mindestens einem Carbonylgruppen-enthaltenden Polymer unter Verwendung eines Primers, wobei der Primer, bezogen auf den Polymeranteil des Primers, mindestens 20 Gew.-% eines Polymeres enthält, welches Maleinsäureanhydrid- oder Maleinsäureanhydrid-Derivat-Einheiten umfasst. Darüber hinaus betrifft die vorliegende Erfindung entsprechend verschweißte Produkte.

EP 3 156 212 A1

**EP 3 156 212 A1**

**Beschreibung**

Die vorliegende Erfindung bezieht sich auf ein Verfahren zum Verschweißen von einem Polyolefin-Kunststoff mit einem Kunststoff basierend auf mindestens einem Carbonylgruppen-enthaltenden Polymer unter Verwendung eines Primers, wobei der Primer, bezogen auf den Polymeranteil des Primers, mindestens 20 Gew.-% eines Polymeres enthält, welches Maleinsäureanhydrid- oder Maleinsäureanhydrid-Derivat-Einheiten umfasst. Darüber hinaus betrifft die vorliegende Erfindung entsprechend verschweißte Produkte.

Aus dem Stand der Technik sind verschiedene Verfahren bekannt, um zwei oder mehrere Substrate, die aus Kunststoffen, wie zum Beispiel aus Polyethylen (PE), Polyacrylat oder Polyamid (PA) bestehen, miteinander zu verbinden. Dabei gibt es sowohl mechanische Verbindungsmöglichkeiten, wie beispielsweise das Rasten oder Schrauben, oder Klebeverfahren. Alternativ dazu können Kunststoffe auch miteinander verschweißt werden. Beim Schweißen handelt sich um ein Fügeverfahren für eine nicht lösbare, stofflich physikalische Verbindung im Allgemeinen artgleicher Kunststoffe, wie z.B. PE mit PE oder PA mit PA. Artgleiche thermoplastische Kunststoffe sind solche Polymere, die sich hinsichtlich ihrer Molekularstruktur, ihrer Schmelztemperatur, der Schmelzviskosität und ihres Wärmeausdehnungskoeffizienten nicht wesentlich unterscheiden und grundsätzlich bedingt miteinander mischbar sind. Meistens handelt sich es bei artgleichen Kunststoffen um Kunststoffe einer identischen Polymer-Basis bzw. um identische Kunststoffe.

Es sind verschiedenste Verfahren bekannt, um zwei oder mehrere artgleiche Kunststoffe miteinander zu verschweißen. Dabei können unterschiedlichste Schweißverfahren eingesetzt werden, wie beispielsweise Infrarot-Schweißen, Infrarot/Vibrationsschweißen oder Ultraschallschweißen. Diese Verfahren zum Verschweißen von gleichartigen Kunststoffen basieren darauf, dass die jeweiligen Kunststoffe im Bereich der Schweißzone aufgeschmolzen werden und dass sich die Stoffe in dieser Zone stoff- und kraftschlüssig miteinander verbinden.

Diese Schweißverfahren funktionieren immer so lange gut, solange artgleiche Kunststoffe miteinander verbunden werden sollen. Sobald allerdings zwei Kunststoffe miteinander verschweißt werden sollen, die artungleich bzw. unverträglich miteinander sind, wie zum Beispiel Kunststoffe aus Polyamid und Polyolefin, kann keine dauerhafte Verbindung mit hoher mechanischer Festigkeit zwischen den beiden Substraten hergestellt werden. In dem Fall des Versuches eines direkten Verschweißens mit dem aus dem Stand der Technik bekannten Schweißverfahren der beiden Kunststoffe Polyamid und Polyolefin, wie zum Beispiel Polyethylen oder Polypropylen mit Polyamid 6 werden keine bis sehr geringe Festigkeiten erzielt.

Bisher konnten entsprechende unterschiedliche Kunststoffe lediglich durch eine mechanische Verbindung oder ein Klebeverfahren miteinander verbunden werden. Der Nachteil an einer mechanischen Verbindung ist die komplizierte Anbringung, die punktuelle Materialbelastung als auch die Notwendigkeit eines zusätzlichen mechanischen Verbindungsmittels. Des Weiteren können bei einer mechanischen Verbindung selten stoffschlüssige Verbindungen erreicht werden. Der Nachteil an einem Klebeverfahren ist jedoch, dass die Endfestigkeit der Verbindung erst nach einem langen Zeitraum, der bis zu mehreren Wochen betragen kann, erreicht wird. Des Weiteren erfordert das Verkleben von niederenergetischen Oberflächen meist eine aufwendige Vorbehandlung der Fügepartner. Zusätzlich ist eine Klebeverbindung häufig aufgrund der äußeren Witterung nicht unbegrenzt stabil. Außerdem ist die Bereitstellung einer sauberen Klebeverbindung häufig kompliziert und zeitaufwendig. Somit stellt die Verbindung mittels eines Schweißverfahrens für Kunststoffe die sauberste, schnellste und einfachste Lösung dar.

Die Aufgabe der vorliegenden Erfindung bestand somit darin, ein einfaches Verfahren zum Verschweißen von einem Polyolefin-Kunststoff mit einem Kunststoff basierend auf mindestens einem Carbonylgruppen-enthaltenden Polymer zu finden. Dabei sollte die Verbindung zwischen diesen unterschiedlichen Kunststoffen durch die Schweißnaht möglichst stabil und von Dauer sein.

Überraschenderweise wurde gefunden dass diese Aufgabe durch ein Verfahren zum Verschweißen von einem Polyolefin-Kunststoff mit einem Kunststoff basierend auf mindestens einem Carbonylgruppen-enthaltenden Polymer unter Verwendung eines Primers gelöst wird, wobei der Primer, bezogen auf den Polymeranteil des Primers, mindestens 20 Gew.-% mindestens eines Polymeres enthält, welches Maleinsäureanhydrid- oder Maleinsäureanhydrid-Derivat-Einheiten umfasst.

Durch die Verwendung eines Primers enthaltend mindestens ein entsprechendes Polymer konnten beim Verschweißen von einem Polyolefin-Kunststoff mit einem Kunststoff basierend auf mindestens einem Carbonylgruppen-enthaltenden Polymer besonders stabile stoffschlüssige Verbindungen zwischen den Kunststoffen erhalten werden.

Der erste Fügepartner zum Verschweißen unter Verwendung eines Primers ist ein Polyolefin-Kunststoff, insbesondere ein thermoplastischer Polyolefin-Kunststoff. Ein Polyolefin-Kunststoff basiert auf polyolefinischen Polymeren, wie Homo- und Copolymere von alpha-Olefinen. Die polyolefinischen Polymere können ausgewählt werden aus der Gruppe bestehend aus Poly-alpha-Olefin-Homopolymeren auf Basis von Ethylen, Propylen und/oder Butylen, insbesondere Homopolymere aus Ethylen oder Propylen, und Poly-alpha-Olefin-Copolymere auf Basis von Ethen, Propen, 1-Buten, 1-Hexen und 1-Octen, insbesondere Ethylen/alpha-Olefin- und Propylen/alpha-Olefin-Copolymere, vorzugsweise Copolymere von Ethylen oder Propen mit 1-Buten, 1-Hexen, 1-Octen, oder einer Kombination davon. Insbesondere sind die Polyolefin-Kunststoffe ausgewählt aus Polyethylen- (insbesondere high-density/HD-Polyethylen-, medium-density/MD-Polyethylen-, low-density/LD-Polyethylen-, ultra high molecular weight/UHMW-Polyethylen- und linear low-density/LLD-Polyethylen-, vorzugsweise HD-Polyethylen-, MD-Polyethylen- oder LD-Polyethylen-) und Polypropylen-Kunststoffen. Besonders bevorzugt ist der Polyolefin-Kunststoff ein Polypropylen-Kunststoff.

Vorzugsweise haben die Polyolefin-Polymere, insbesondere Polypropylen-Polymere, eine gewichtsmittlere Molmasse (Gewichtsmittel Mw) von größer 10000 g/mol, insbesondere größer 20000 g/mol, bevorzugt größer 50000 g/mol, besonders bevorzugt größer 100000 g/mol. Vorzugsweise weisen die Polyolefin-Polymere, insbesondere Polypropylen-Polymere eine gewichtsmittlere Molmasse (Gewichtsmittel Mw) von kleiner 2000000 g/mol, insbesondere kleiner 1000000 g/mol, bevorzugt kleiner 500000 g/mol auf. Besonders bevorzugte Polyethylen-Polymere weisen eine gewichtsmittlere Molmasse (Gewichtsmittel Mw) von 50000 g/mol bis 1000000 g/mol, insbesondere von 200000 g/mol bis 500000 g/mol auf. Andere bevorzugte Polyethylen-Polymere (UHMW-PE-Polymere) weisen eine gewichtsmittlere Molmasse von größer 2000000 g/mol, insbesondere von 4000000 - 6000000 g/mol auf. Besonders bevorzugte Polyolefin-Polymere, insbesondere Polypropylen-Polymere haben gewichtsmittlere Molmassen (Gewichtsmittel Mw) von 50000 g/mol bis 250000 g/mol.

Die Polyolefin-Kunststoffe, insbesondere Polypropylen-Kunststoffe können auch weitere Komponenten enthalten, z.B. Füllstoffe, wie Glasfasern, Pigmente, Farbstoffe, Rheologiehilfsmittel, Entformungshilfen oder Stabilisatoren. Bevorzugt besteht der Polyolefin-Kunststoff, insbesondere Polyethylen- und/oder Polypropylen-Kunststoff, bevorzugt Polypropylen-Kunststoff zu mehr als 80 Gew.-%, insbesondere zu mehr als 90 Gew.-%, bevorzugt zu mehr als 98 Gew.-% aus den genannten Polyolefin-Polymeren, insbesondere den genannten Polyethylen- und/oder Polypropylen-Polymeren, bevorzugt Polypropylen-Polymeren, jeweils bezogen auf den Polymeranteil des Polyolefin-Kunststoffes (Gesamt Polyolefin-Kunststoff ohne Füllstoffe). Vorzugsweise besteht der Polyolefin-Kunststoff, bevorzugt Polypropylen-Kunststoff zu mehr als 50 Gew.-%, insbesondere zu mehr als 70 Gew.-%, vorzugsweise zu mehr als 90 Gew.-%, bevorzugt zu mehr als 95 Gew.-%, besonders bevorzugt zu mehr als 98 Gew.-% aus dem genannten Polyolefin-Polymeren, insbesondere dem Polypropylen, jeweils bezogen auf den gesamten Polyolefin-Kunststoff (mit Füllstoffen).

Der zweite Fügepartner zum Verschweißen unter Verwendung eines Primers ist ein Kunststoff basierend auf einem Carbonylgruppen-enthaltenden Polymer. Im Sinne der Erfindung bedeutet "basierend auf einem Carbonylgruppen-enthaltenden Polymer", dass der Polymeranteil des Kunststoffes zumindest aus 50 Gew.-%, vorzugsweise aus 70 Gew.-% des Carbonylgruppen-enthaltenden Polymeres besteht. Bei dem Carbonylgruppen-enthaltenden Polymer handelt es sich vorzugsweise um ein Polyamid oder einen Polyester, insbesondere einen Polyterephthalatester.

Bei dem Polyamid-Kunststoff handelt es sich vorzugsweise um ein thermoplastisches Polyamid. Zu den Thermoplasten auf Amid-Basis gehören beispielsweise Polyamid 6, ein Homopolymerisat aus epsilon-Caprolactam (Polycaprolactam); Polyamid 11, ein Polykondensat aus 11-Aminoundecansäure (Poly-11-aminoundecanamid); Polyamid 12, ein Homopolymerisat aus omega-Laurinlactam (Polylaurinlactam); Polyamid 6.6, ein Homopolykondensat aus Hexamethylendiamin und Adipinsäure (Polyhexamethylenadipamid); Polyamid 6.10, ein Homopolykondensat aus Hexamethylendiamin und Sebacinsäure (Polyhexamethylensebacamid); Polyamid 6.12 ein Homopolykondensat aus Hexamethylendiamin und Dodecandisäure (Polyhexamethylendodecanamid) oder Polyamid 6-3-T, ein Homopolykondensat aus Trimethylhexamethylendiamin und Terephthalsäure (Polytrimethylhexamethylenterephthalamid), Poly(p-phenylenterephthalamid) oder Poly(m-phenylenterephthalamid) aus Phenylendiamin und Terephthalsäure, Polyphthalamid PPA aus verschiedenen Diaminen und Terephthalsäure sowie Gemische davon.

Optisch transparente Polyamide umfassen mikrokristalline Polyamide enthaltend lineare aliphatische Dicarbonsäuren und cycloaliphatische Diamine, amorphe Polyamide enthaltend lineare aliphatische Dicarbonsäuren und cycloaliphatische Diamine und optional Lactame bzw. Aminocarbonsäuren, amorphe Polyamide enthaltend Terephthalsäure und cycloaliphatische oder verzweigte aliphatische Diamine und optional Lactame bzw. Aminocarbonsäuren oder amorphe Polyamide enthaltend Isophthalsäure und cycloaliphatische oder lineare oder verzweigte aliphatische Diamine und optional Lactame bzw. Aminocarbonsäuren. Geeignete optisch transparente Polyamide sind beispielsweise Amide aus Dodecandisäure und einem Isomerengemisch des 4,4'-Bis(aminocyclohexyl)-methans, aus Terephthalsäure und dem Isomerengemisch des 2,2,4- und 2,4,4-Trimethylhexamethylendiamins, aus Dodecandisäure und dem Isomerengemisch des 3,3'-Dimethyl-4,4'-bis(aminocyclohexyl)-methans, aus Laurinlactam, Isophthalsäure und dem Isomerengemisch des 3,3'-Dimethyl-4,4'-bis(aminocyclohexyl)-methans oder aus Tetradecandisäure und dem Isomerengemisch des 3,3'-Dimethyl-4,4'-bis(aminocyclohexyl)-methans oder aus epsilon-Caprolactam oder omega-Laurinlactam.

Bevorzugte Polyamide werden ausgewählt aus der Gruppe bestehend aus Polyamid 6, Polyamid 6.6, Polyamid 6.10, Polyamid 6.12, Polyamid 10.10, Polyamid 11, Polyamid 12, Polyamid 10.12, Polyphthalamiden, optischen transparenten Polyamiden oder Mischungen auf Basis dieser Polyamide. Besonders bevorzugte Polyamide sind ausgewählt aus Polyamid 6, Polyamid 6.6, Polyamid 12, Polyphthalamiden, optisch transparenten Polyamiden sowie deren Mischungen, insbesondere Polyamid 6, Polyamid 6.6, Polyamid 12, Polyphthalamiden, sowie deren Mischungen.

Die Polyamid-Kunststoffe können auch weitere Komponenten enthalten, z.B. Füllstoffe, wie Glasfasern, Pigmente, mineralische Partikel, Farbstoffe, Rheologiehilfsmittel, Entformungshilfen oder Stabilisatoren. Vorzugsweise besteht der Polyamid-Kunststoff zu mehr als 40 Gew.-%, insbesondere zu mehr als 60 Gew.-%, vorzugsweise zu mehr als 70 Gew.-%, bevorzugt zu mehr als 90 Gew.-% aus den genannten Polyamiden, jeweils bezogen auf den gesamten Polyamid-Kunststoff (mit Füllstoffen). Vorzugsweise besteht der Polyamid-Kunststoff zu mehr als 90 Gew.-%, insbesondere zu mehr als 95 Gew.-%, bevorzugt zu mehr als 98 Gew.-% aus den genannten Polyamiden, jeweils bezogen auf den Polymeranteil des Polyamid-Kunststoffes (Gesamt Polyamid-Kunststoff ohne Füllstoffe). Bevorzugt weisen die Polyamid-Kunststoffe einen Gehalt an den genannten Polyamiden von 50 - 90 Gew.-%, insbesondere 60 - 80 Gew.-% auf, jeweils bezogen auf den gesamten Polyamid-Kunststoff (mit Füllstoffen).

Geeignete Polyester-Kunststoffe sind ebenfalls an sich bekannt und in der Literatur beschrieben. Bevorzugte Polyester-Kunststoffe umfassen einen Polyester mit einem aromatischen Ring in der Hauptkette, der von einer aromatischen Dicarbonsäure herrührt. Der aromatische Ring kann auch substituiert sein, z. B. durch Halogene wie Chlor oder Brom oder durch C1-C4-Alkylgruppen wie Methyl-, Ethyl-, i- bzw. n-Propylgruppen oder n-, i- bzw. t-Butylgruppen. Die Polyester können durch Umsetzung von aromatischen Dicarbonsäuren, deren Estern oder anderer esterbildender Derivate hiervon mit aliphatischen Dihydroxyverbindungen in an sich bekannter Weise hergestellt werden. Als bevorzugte Dicarbonsäuren sind Naphthalindicarbonsäure, ortho-Phthalsäure, Terephthalsäure und Isophthalsäure oder deren Mischungen zu nennen. Bis zu 30 Mol-% der aromatischen Dicarbonsäuren können durch aliphatische oder cycloaliphatische Dicarbonsäuren wie Adipinsäure, Azelainsäure, Sebacinsäure, Dodecandisäure und Cyclohexandicarbonsäure ersetzt werden. Von den aliphatischen Dihydroxyverbindungen werden Diole mit 2 bis 8 Kohlenstoffatomen, insbesondere 1,2-Ethandiol, 1,4-Butandiol, 1,6-Hexandiol, 1,4-Hexandiol, 1,4-Cyclohexandimethanol und Neopentylglykol oder deren Mischungen bevorzugt. Als besonders bevorzugte Polyester sind Polyalkylenterephthalate, die sich von Alkandiolen mit 2 bis 6 C-Atomen ableiten, zu nennen.

Die Polyester-Kunststoffe werden vorzugsweise ausgewählt aus der Gruppe aus Polyethylenterephthalat (PET)-, Polyethylennaphthalat-, Polybutylennaphthalat- und Polybutylenterephthalat (PBT)-Kunststoffe sowie Mischungen dieser, insbesondere Polyethylenterephthalat (PET)- und Polybutylenterephthalat (PBT)-Kunststoffe sowie Mischungen dieser. Die Polyester-Kunststoffe können auch weitere Komponenten enthalten, z.B. Füllstoffe, wie Glasfasern, Pigmente, mineralische Partikel, Farbstoffe, Rheologiehilfsmittel, Entformungshilfen oder Stabilisatoren. Vorzugsweise besteht der Polyester-Kunststoff, insbesondere der PET- oder PBT-Kunststoff zu mehr als 40 Gew.-%, insbesondere zu mehr als 60 Gew.-%, vorzugsweise zu mehr als 70 Gew.-%, bevorzugt zu mehr als 90 Gew.-% aus den genannten Polyestern, jeweils bezogen auf den gesamten Polyester-Kunststoff (mit Füllstoffen). Vorzugsweise besteht der Polyester-Kunststoff zu mehr als 90 Gew.-%, insbesondere zu mehr als 95 Gew.-%, bevorzugt zu mehr als 98 Gew.-% aus den genannten Polyestern, jeweils bezogen auf den Polymeranteil des Polyester-Kunststoffes (Gesamt Polyester-Kunststoff ohne Füllstoffe). Bevorzugt weisen die Polyester-Kunststoffe einen Gehalt an den genannten Polyestern von 50 - 90 Gew.-%, insbesondere 60 - 80 Gew.-% auf, jeweils bezogen auf den gesamten Polyester-Kunststoff (mit Füllstoffen).

Ein weiterer wesentlicher Bestandteil der Erfindung ist die Verwendung mindestens eines Primers, vorzugsweise genau eines Primers. Der Primer enthält, bezogen auf den Polymeranteil des Primers, mindestens 20 Gew.-%, insbesondere mindestens 50 Gew.-%, bevorzugt mindestens 70 Gew.-% mindestens eines Polymers, welches Maleinsäureanhydrid- oder Maleinsäureanhydrid-Derivat-Einheiten enthält, insbesondere Maleinsäureanhydrid-Einheiten.

Der Primer stellt ein Schweißhilfsmittel dar, welches vorzugsweise als eine Vorbehandlungsschicht auf mindestens einem der zu verschweißenden Oberflächen der Substrate im Bereich der Fügezone aufgetragen wird. Der Primer ist nicht als Klebstoff, Reinigungsmittel oder ähnliches zu verstehen, vielmehr ist der Primer ein Hilfsmittel zum Schweißen, wodurch die Fügepartner in der Fügezone (bzw. Schweißzone) kompatibel zueinander gemacht werden und so in der Fügezone beim Fügen eine stoff- und kraftschlüssige Verbindung zwischen den zu verschweißenden Substraten entsteht.

Die Versuche haben gezeigt, dass durch die Verwendung eines entsprechenden Primers, enthaltend ein erfindungsgemäßes Polymer, die zu fügenden Kunststoffe beim Schweißen in der Fügenaht kompatibilisiert werden konnten und somit eine stabile und dauerhafte Verbindung erzielt werden kann. Ohne die Verwendung eines entsprechenden Primers konnten keine oder nur sehr geringe Festigkeiten der geschweißten Verbindung erzielt werden. Vorzugsweise weisen die gefügten Substrate eine Zugfestigkeit von mehr als 2 MPa, insbesondere mehr als 5 MPa auf. Die Zugfestigkeit wird mittels einer Zuggeschwindigkeit von 5 mm/s gemäß der in den Versuchen beschriebenen Versuchsdurchführung bestimmt.

Bei dem mindestens einen ersten Polymer handelt es sich um Polymere, insbesondere Copolymere, welche in ihrem Polymergrundgerüst Maleinsäureanhydrid-Gruppen einreagiert bzw. einpolymerisiert enthalten. Dabei können die Polymere die Maleinsäureanhydrid-Gruppen sowohl im Backbone einpolymerisiert enthalten, wie zum Beispiel in einem Copolymer aus mindestens einem Maleinsäureanhydrid-Monomer und Acrylat- und/oder alpha-Olefin-Monomeren, als auch aufgepfropft enthalten, wie bei Maleinsäureanhydrid gepfropften Polyolefinen. Dabei kann in das Polymer ein Maleinsäureanhydrid bzw. Maleinsäureanhydrid-Derivat, insbesondere Maleinsäureanhydrid einreagiert bzw. einpolymerisiert sein. Ein Beispiel für ein Maleinsäureanhydrid-Derivat ist 1,2,3,6-Tetrahydrophthalsäureanhydrid, welches die relevante 5-gliedrige Anhydrid-Gruppe umfasst.

Besonders bevorzugt handelt es sich bei dem mindestens einem Polymer des Primers um ein Maleinsäureanhydrid gepfropftes Polyolefin, insbesondere um ein Maleinsäureanhydrid gepfropftes Polyethylen oder Maleinsäureanhydrid gepfropftes Polypropylen.

In einer anderen besonders bevorzugten Ausführungsform enthält der Primer vorzugsweise ein Copolymer, welches neben dem Maleinsäureanhydrid bzw. Maleinsäureanhydrid-Derivat ein oder mehrere Monomere ausgewählt aus der Gruppe von Acrylaten und Methacrylaten (zusammen (Meth)acrylate), insbesondere (Meth)acrylate mit einem Alkylrest mit 1 bis 12 Kohlenstoffatomen, vorzugsweise 1 bis 4 Kohlenstoffatomen, vorzugsweise Ethyl- und Butyl(meth)acrylat, (Meth)acrylsäure und alpha-Olefinen, insbesondere Ethen, Propen, 1-Buten, 1-Hexen und 1-Octen, bevorzugt Ethen einpolymerisiert enthält. Des Weiteren können auch funktionale Monomere mit Funktionalitäten wie beispielsweise Epoxid- oder Isocyanatgruppen, Carboxyl- oder Aminogruppen, aber auch Alkoxysilangruppen, eingesetzt werden. Besonders bevorzugt enthält das mindestens eine Copolymer einpolymerisiert zumindest ein Maleinsäureanhydrid(-Derivat), ein (Meth)acrylat und ein alpha-Olefinen, vorzugsweise ein Maleinsäureanhydrid, ein (Meht)acrylat mit einem C1 bis C4 Alkylrest und ein Ethylen oder Propylen.

Die Polymere können in bekannter Weise aus den Monomeren synthetisiert werden. Zusätzlich können die Polymere in einer Polymer-analogen Reaktion gepfropft sein. Besonders bevorzugte Reaktionspartner zum Pfropfen sind Alkohole, Thiole, Amine, Isocyanate, Anhydride, Carbonsäuren, insbesondere Alkohole, bevorzugt Alkohole mit 1 bis 6 Kohlenstoffatomen, wie Methanol und Isobutanol. Zum Pfropfen können die Maleinsäureanhydrid-Monomere bzw. Maleinsäureanhydrid-Einheiten im Polymer mit dem Reaktionspartner reagieren, insbesondere durch Alkohole verestert werden. Vorzugsweise reagieren bzw. verestern die Maleinsäureanhydrid-Gruppen nur partiell, insbesondere weniger als 70 % der Maleinsäureanhydrid-Gruppen. Besonders bevorzugt ist es, wenn die Maleinsäureanhydrid-Gruppen nicht umgesetzt sind und weiterhin als Anhydrid Gruppen vorliegen. In der bevorzugten Ausführung können die Maleinsäureanhydrid-Gruppen auch teilweise hydrolysiert vorliegen. Eine komplette Umsetzung der Maleinsäureanhydrid-Gruppen kann zu einer Verminderung der Festigkeit der resultierenden Schweißverbindung führen.

Besonders vorteilhaft sind Polymere, die einen Maleinsäureanhydrid-Gehalt von größer gleich 0,001 Gew.-%, insbesondere größer gleich 0,01 Gew.-%, bevorzugt größer gleich 0,02 Gew.-%, besonders bevorzugt größer gleich 0,05 Gew.-% bezogen auf das Polymer enthalten. In vorteilhafter Weise enthalten die Polymere einen Maleinsäureanhydrid-Gehalt von 0,01 - 15 Gew.-%, insbesondere 0,02 - 10 Gew.-%, bevorzugt 0,5 - 5 Gew.-% bezogen auf das Polymer. In einer anderen bevorzugten Ausführungsform enthalten die Polymere einen Maleinsäureanhydrid-Gehalt von 2 - 30 Gew.-%, insbesondere 5 - 15 Gew.-%, bezogen auf das Polymer. Polymere mit einem entsprechenden Maleinsäureanhydrid-Gehalt weisen besonders gute Festigkeiten der geschweißten Verbindung auf. Vorteilhafterweise haben die Polymere ein gewichtsmittleres Molekulargewicht Mw von größer gleich 5000 g/mol, insbesondere größer gleich 50000 g/mol, bevorzugt größer gleich 100000 g/mol. Bevorzugt haben die Polymere ein gewichtsmittleres Molekulargewicht Mw im Bereich von 5000 - 2000000 g/mol, insbesondere von 50000 - 1000000 g/mol, bevorzugt von 100000 - 500000 g/mol. Polymere mit einem entsprechenden gewichtsmittleren Molekulargewicht wirken sich positiv auf die Sprödigkeit und Festigkeit der erhaltenen Verbindung aus. Das gewichtsmittlere Molekulargewicht kann mittels GPC gegen einen Polystyrol-Standard bestimmt werden.

Neben dem ersten Polymer kann der Primer vorzugsweise mindestens ein weiteres Polymer enthalten. Das mindestens eine weitere Polymer bzw. Polymer ist vorzugsweise zu mindestens einem der beiden zu verschweißenden Kunststoffen und zum Primer Copolymer kompatibel. Besonders bevorzugt enthält der Primer mindestens ein Polyolefin- und/oder Polyamid-Polymer, vorzugsweise jeweils die oben spezifizierten. Die Verwendung eines zusätzlichen Polymers neben dem erfindungsgemäßen Copolymer im Primer kann zu einer weiteren Verbesserung der Festigkeit führen.

Als kompatibles weiteres Polymer wird vorzugsweise ein Polymer eingesetzt, welches zu einem, insbesondere zu beiden zu fügenden Kunststoffen und insbesondere auch zu dem oben genannten ersten erfindungsgemäßen Polymer eine gewichtete quadratische Distanz der Hansen-Parameter $(R_a)^2$ von kleiner 22 MPa, insbesondere von kleiner 17 MPa, bevorzugt von kleiner 15 MPa, besonders bevorzugt von kleiner 12 MPa aufweist.

Die gewichtete quadratische Distanz der Hansen-Parameter $(R_a)^2$ bestimmt sich gemäß der folgenden Formel:

$$(R_a)^2 = 4(\Delta\delta_D)^2 + (\Delta\delta_P)^2 + (\Delta\delta_H)^2$$

In dieser Formel ist $\delta_D$ der Hansen-Parameter für die Dispersionskräfte, $\delta_P$ der Hansen-Parameter für die Polarität und $\delta_H$ der Hansen-Parameter für die Wasserstoffbrückenbindungen. $\Delta\delta_D$, $\Delta\delta_P$ und $\Delta\delta_H$ stellen jeweils die Differenzen dieser Hansen-Parameter der zu vergleichenden Kunststoffe bzw. Polymere dar, z.B. $\Delta\delta_D = (\delta_{D1} - \delta_{D2})$ der Polymere 1 und 2. Die Bestimmung der Werte der einzelnen Hansen-Parameter $\delta_D$, $\delta_P$ und $\delta_H$ für die jeweiligen Kunststoffe bzw. Polymere erfolgt gemäß dem Buch "Hansen Solubility Parameters: A User's Handbook" von Charles M. Hansen (second edition; Taylor & Francis Group; 2007; ISBN-10 0-8493-7248-8). Dieser Quelle können bereits viele Werte einzelner Polymere entnommen werden. Gemäß der in diesem Buch beschriebenen Methode können die Hansen-Parameter vorzugsweise mit dem Programm HSPIP (4th Edition 4.1.07) aus der mitgelieferten Datenbank entnommen, oder, falls nicht vorhanden, mit der enthaltenen "DIY"-Funktionalität des Programms, vorzugsweise unter Verwendung des mitgelieferten neuronalen Netzes, wie in der Hilfe beschrieben, bestimmt werden. Das HSPIP Programm ist über die Fa. Steven Abbott TCNF Ltd erhältlich.

Der Gehalt des weiteren Polymeres, insbesondere eines Polyolefin- und/oder Polyamid -Polymers, am Primer ist bevorzugt 1 - 40 Gew.-%, insbesondere 5 - 30 Gew.-%, besonders bevorzugt 10 - 20 Gew.-%, jeweils bezogen auf das Gesamtgewicht des Primers. Der Gehalt des weiteren Polymeres am Polymergehalt des Primer ist bevorzugt 5 - 70 Gew.-%, insbesondere 20 - 60 Gew.-%, besonders bevorzugt 30 - 50 Gew.-%, jeweils bezogen auf den Gesamtpolymeranteil des Primers (Primer ohne Lösungsmittel und ohne Füllstoffe).

Neben dem erfindungsgemäßen Polyolefin-Polymer und dem weiteren Polymer kann der Primer auch ein Lösungsmittel, insbesondere ein organisches Lösungsmittel enthalten. Vorzugsweise enthält der Primer einen Lösungsmittelgehalt von 10 - 95 Gew.-%, insbesondere 50 - 90 Gew.-%, besonders bevorzugt 70 - 85 Gew.-%, jeweils bezogen auf das Gesamtgewicht des Primers.

Geeignete Lösungsmittel sind alle gängigen Lösungsmittel, wie zum Beispiel Wasser, Alkohole, wie Ethanol, Alkane, wie Isooctan, Ketone, wie Mehylisobutylketon (MIBK) oder Cyclohexanon (CH), Ether, wie Diethylether oder Tetrahydrofuran (THF), Ester, wie Essigsäureethylester, oder Carbonate, wie Dimethyl- oder Dipropylcarbonat, Toluol, Xylol oder Gemische daraus.

Wenn organische Lösungsmittel eingesetzt werden, beträgt der Gesamtpolymergehalt des Primers vorzugsweise 1 - 90 Gew.-%, insbesondere 2 - 50 Gew.-%, besonders bevorzugt 5 - 15 Gew.-%, jeweils bezogen auf das Gesamtgewicht des Primers. Der Gesamtpolymergehalt entspricht dem Gehalt aller im Primer verwendeten Polymere, insbesondere der erfindungsgemäßen Polymere und der oben beschriebenen weiteren Polymere.

In einer anderen bevorzugten Ausführungsform liegt der Primer in Form einer wässrigen Dispersion oder Emulsion vor. In diesem Fall ist das erfindungsgemäße Polymer bzw., wenn vorhanden, die weiteren Polymere in Wasser emulgiert oder dispergiert. In diesem Fall beträgt der Gesamtpolymergehalt des Primers vorzugsweise 5 - 90 Gew.-%, insbesondere 20 - 70 Gew.-%, besonders bevorzugt 30 - 55 Gew.-%, jeweils bezogen auf das Gesamtgewicht des Primers. Für die wässrige Dispersion/Emulsion ist es vorteilhaft, dass die Polymerkomponente im Wesentlichen nur aus dem erfindungsgemäßen Polymer und dem gegebenenfalls vorhandenen oben genannten weiteren Polymer, insbesondere nur aus dem erfindungsgemäßen Polymer bzw. dessen Mischung besteht. Unter dem Begriff "im Wesentlichen aus" wird erfindungsgemäß verstanden, wenn die Polymerkomponente zu mehr als 95 Gew.-%, vorzugsweise mehr als 97 Gew.-%, ganz besonders bevorzugt mehr als 99 Gew.-% aus der erfindungsgemäßen Polymer und dem gegebenenfalls vorhandenen oben genannten weiteren Polymer, insbesondere nur aus dem erfindungsgemäßen Polymer besteht.

In einer besonders bevorzugten Ausführungsform ist der Primer im Wesentlichen frei von Lösungsmitteln.

Neben dem erfindungsgemäßen Polymer, den oben genannten weiteren Polymeren und einem Lösungsmittel kann der Primer weitere Komponenten enthalten, wie zum Beispiel Füllstoffe, (Fluoreszenz)-Farbstoffe und Pigmente, rheologische Hilfsmittel, Entschäumungshilfen, Benetzungshilfsmittel, Stabilisatoren oder Weichmacher. Abgesehen von Farbstoffen und Pigmenten ist der Primer jedoch vorzugsweise im Wesentlichen frei von weiteren Komponenten, insbesondere im Wesentlichen frei von jeglichen anderen Komponenten. Unter dem Begriff "im Wesentlichen frei von" wird erfindungsgemäß verstanden, wenn der Primer weniger als 5 Gew.-%, vorzugsweise weniger als 1 Gew.-%, ganz besonders bevorzugt weniger als 0,1 Gew.-% der jeweiligen Substanzen, insbesondere nicht die jeweiligen Substanzen enthalten.

Bei dem erfindungsgemäßen Verfahren zum Verschweißen von einem Polyolefin-Kunststoff mit einem Kunststoff basierend auf mindestens einem Carbonylgruppen-enthaltenden Polymer wird ein Primer verwendet, wobei der Primer, bezogen auf den Polymeranteil des Primers, mindestens 20 Gew.-%, eines Polymers enthält, welches Maleinsäureanhydrid- oder Maleinsäureanhydrid-Derivat-Einheiten umfasst.

Der Primer dient bei diesem Verfahren als Hilfsmittel für die Verschweißung der beiden unterschiedlichen Kunststoffe durch jeweiliges Aufschmelzen. Durch den verwendeten Primer enthaltend ein erfindungsgemäßes Polymer kann eine Verträglichkeit zwischen den beiden Fügepartnern hergestellt werden, wodurch eine stabile und dauerhafte, stoffschlüssige Verbindung zwischen den beiden Kunststoffen hergestellt werden kann.

Der Primer kann durch verschiedenste Verfahren auf die Oberfläche eines oder beider Fügepartner aufgetragen werden. So kann die Auftragung zum Beispiel durch eine Dosiervorrichtung, durch eine Nadel und Dosierroboter, durch Spritzgießen, durch Extrusion, durch Folienauftrag, durch Auftrag als Hotmelt, durch Aufsprühen, durch Aufstreichen oder durch Dippen erfolgen. Dabei kann der Primer entweder nur auf eine Oberfläche oder auf beide Oberflächen der zu verschweißenden Substrate aufgetragen werden. Vorzugsweise wird der Primer nur auf eine Oberfläche, insbesondere die Polyamid-Oberfläche, aufgetragen.

Für den Fall, dass der Primer Lösungsmittel enthält, wird der Primer nach dem Auftrag auf eine oder beide Oberflächen vorzugsweise so lange getrocknet bis das Lösungsmittel soweit verdampft ist, dass eine nicht klebrige, dimensionsstabile Primerschicht entstanden ist. Insbesondere ist der Primer bereits nach wenigen Sekunden und bis zu mehreren Wochen schweißbar. Vorzugsweise wird der Primer nach dem Auftrag für mindestens eine Stunde, bevorzugt für mindestens 12 Stunden getrocknet.

Vorzugsweise erfolgt der Auftrag auf eine oder beide Oberflächen der zu verschweißenden Substrate in der Weise, dass der Primer eine Schichtdicke von 1 μm bis 10000 μm, insbesondere 100-5000 μm, bevorzugt 500-3000 μm, besonders bevorzugt 1000-2000 μm hat. Bevorzugt sind vor allem Schichtdicken von größer 100 μm. Falls ein Lösungsmittel im Primer enthalten war, bezieht sich die Schichtdicke auf den vom Lösemittel getrockneten Primer.

Nach dem Auftragen auf einen bzw. beide Oberflächen der zu verschweißenden Substrate und gegebenenfalls dem Trocknen des Primers können die zu verschweißenden Substrate mit einem gängigen Schweißverfahren miteinander verbunden werden. Das Schweißen von Kunststoffen erfolgt im Allgemeinen durch eine lokale Plastifizierung der Fügepartner in der Fügeebene und das Fügen unter Druck. Die Prozessparameter sind so zu wählen, dass ein ausgeprägtes Quetschfließen der Schmelze zu einer optimalen Verbindung der Fügepartner in der Fügeebene führt. Die Erwärmung kann über Konvektion, Kontakterwärmung, Strahlung oder Reibung erfolgen. Der unterschiedliche Energieeintrag zum Plastifizieren kann auf vielfältige Art und Weise erfolgen und hat zu verschiedenen Prozessen zum Schweißen von Kunststoffen geführt. Geeignete Schweißverfahren sind beispielsweise:

- Heißgasschweißen [HG](Hot gas welding)
  Konvektive Erwärmung mit einem heißen Gasstrom, im allgemeinen Luft, zweistufiger Prozess
- Heizelementschweißen [HE] (Hot plate welding)
  Kontakterwärmung, zweistufiger Prozess
- Ultraschallschweißen [US] (Ultrasonic welding)
  Erwärmung durch Reibung, eine transversale Welle im Ultraschallbereich führt zu einer Erwärmung in der Grenzschicht, einstufiger Prozess
- Hochfrequenzschweißen [HF] (High frequency welding)
  Erwärmung durch innere Reibung, polare Moleküle orientieren sich entsprechen eines hochfrequenten Magnetfelds, einstufig, nur für polare Kunststoffe und Folien eingesetzt
- Vibrationsschweißen [VIB] (Friction welding: Linear; Orbital; Spin; Angle) Erwärmung durch Reibung, einstufiger Prozess
- Laserschweißen [LW] (Laser welding: Kontur, Simultan, Quasisimultan, Maske) Erwärmung durch Strahlung, Strahlung kohärent, Lasertransmissionsschweißen, im Allgemeinen einstufig (zweistufig möglich)
- Infrarotschweißen [IR] (Infrared welding)
  Erwärmung über Strahlung, Strahlung inkohärent, zweistufig

Die oben angeführten Schweißverfahren können gegebenenfalls auch kombiniert werden wie zum Beispiel das Infrarotschweißen mit dem Vibrationsschweißen. Besonders bevorzugt erfolgt das Verschweißen der Kunststoffe durch ein Schweißverfahren ausgewählt aus Heizelementschweißen, Wärmekontakt- oder Wärmeimpulsschweißen, Warmgas- oder Heissgasschweißen, Vibrationsschweißen, Mikrowellen- oder Induktionsschweißen. Laserstumpf- oder Laserdurchstrahlschweißen, Infrarotschweißen, Ultraschallschweißen, sowie Kombinationen daraus, insbesondere ausgewählt aus Infrarotschweißen, Heizelementschweißen, Vibrationsschweißen, Ultraschallschweißen, sowie Kombinationen daraus.

Besonders bevorzugt ist ein Verfahren zum stoffschlüssigen Fügen der zwei Kunststoffe unter Verwendung des Primers, beinhaltend die folgenden Schritte.

- Bereitstellen des ersten Kunsstoffes aufweisend eine erste Fügezone,
- Bereitstellen des zweiten Kunsstoffes aufweisend eine zweite Fügezone,
- Vorwärmen der ersten Fügezone,
- Auftragen des Primers auf die vorgewärmte erste Fügezone, insbesondere bei lösungsmittelfreien Primern,
- In-Kontakt-bringen der mit dem Primer versehenen ersten Fügezone mit der zweiten Fügezone,
- Stoffschlüssiges Verbinden der ersten Fügezone mit der zweiten Fügezone insbesondere durch den Einsatz üblicher Schweißverfahren von Kunststoffen wie beispielsweise dem Infrarotschweißen, Heizelementschweißen, Warmgasschweißen, Vibrationsschweißen, Ultraschallschweißen.

Für das Schweißen von Kunststoffen kann allgemein das Verständnis der DIN 1910-3:1977-09 angewendet werden. Mithin kann darunter ein stoffschlüssiges Verbinden von thermoplastischen Kunststoffen unter Zuhilfenahme von Wärme oder/und Druck verstanden werden. Die Erwärmung kann beispielsweise auf Basis von Kontakterwärmung (Schweißen durch festen Körper), Konvektionserwärmung (Schweißen durch Warmgas), Strahlungserwärmung (Schweißen durch Strahl) und Erwärmung durch Reibung (Schweißen durch Bewegung) sowie das Schweißen durch elektrischen Strom erfolgen.

In einer vorteilhaften Weiterbildung kommt ein Primer zum Einsatz, der derart ausgewählt und auf das Verfahren abgestimmt ist, dass das Auftragen auf eine erwärmte und/oder heiße Fügezone mit einer Temperatur, die kleiner ist als die Zersetzungstemperatur der Polymere im Primer, keinen Einfluss auf die innere chemische Vernetzung des Primers hat.

Vorteilhaft ist es, die erste Fügezone des ersten Kunststoffes vorzuwärmen. Für das Vorwärmen können dem Fachmann bekannte und sich für den Einsatzzweck eignende Hilfsmittel und Techniken zum Einsatz kommen. Insbesondere eignet sich der Einsatz von Warmgas oder Plasma zur Vorwärmung. Denkbar ist auch eine Vorwärmung mittels Bestrahlung, insbesondere Infrarotstrahlung oder Laserstrahlung. Auch kann ein Heizelement oder ein beheiztes Werkzeug zum Einsatz kommen, um die erste Fügezone vorzuwärmen. Schließlich ist auch ein Vorwärmen in einem Ofen oder einem beheizten Raum denkbar. Denkbar ist eine Vorwärmung des gesamten Kunststoffes und somit auch besagter Fügezone. Alternativ oder zusätzlich ist aber auch eine Vorwärmung lediglich der Fügezone selbst möglich.

In einer vorteilhaften Weiterbildung liegt der Abstand der Heizvorrichtung während der Vorwärmung zum Kunststoff, insbesondere zur vorzuwärmenden ersten Fügezone, insbesondere des wärmeabgebenden Bereichs der Heizvorrichtung oder des wärmeauslösenden Bereichs der Heizvorrichtung oder der zur vorzuwärmenden wirksamen Oberfläche der Heizvorrichtung oder die hinsichtlich der ersten Fügezone gegenüberliegenden Bereich der Heizvorrichtung in einem Bereich von 0,5 mm bis 100 mm, vorzugsweise im Bereich von 1 mm bis 60 mm. Denkbar ist alternativ auch, dass eine Erwärmung durch und/oder bei Kontaktierung insbesondere der ersten Fügezone durch das Heizelement der Heizvorrichtung erfolgt.

Ein weiterer Vorteil ist die Auswahl des Kunststoffes für den ersten Fügepartner und die Einstellung der Verfahrensparameter auf den ersten Kunststoff derart, dass die erste Fügezone beim Vorwärmen aufgeschmolzen wird und dass beim Vorwärmen eine Schmelzeschicht in der ersten Fügezone erzeugt wird. Die Dicke der Schmelzeschicht liegt in einer bevorzugten Ausführungsform vorzugsweise im Bereich von 0,05 mm bis 6 mm, besonders bevorzugt im Bereich von 0,1 mm bis 5 mm. Eine derartige Schmelzeschicht kann zu einer besseren Adhäsion und/oder Diffusion und/oder Wechselwirkung der Moleküle führen und in Verbindung mit einem gewissen Fluss zu einer besseren Verbindungsschicht. Befindet sich die Grenzschicht des ersten Kunststoffs im schmelzeflüssigen Zustand, kann es mit dem Primer zu Wechselwirkungen bis hin zu chemischen Bindungen kommen. Die Schmelzschicht kann insbesondere abhängig sein von der Bauteilgeometrie und der jeweiligen Bauteilauslegung. Vorzugsweise sind die Verfahrensparameter derart eingestellt und/oder gewählt, dass es zu keiner Verformung der Bauteile kommt. Bevorzugt ist ein Ausgleich von Temperaturunterschieden zwischen der Fügezone und dem aufzutragenden Primer durch geeignete Maßnahmen und/oder Verfahrensschritte vorgesehen. Dabei ist es insbesondere denkbar den Primer vorzuwärmen, um den Temperaturunterschied zwischen dem vorzugsweise thermoplastischen Primer und der ersten Fügezone zu reduzieren. Dies kann beispielsweise der schnellen Abkühlung der ersten Fügezone zwischen den Prozessschritten entgegenwirken.

Optional erfolgt vorzugsweise vor dem Schritt des Vorwärmens der ersten Fügezone eine Vorbehandlung der ersten Fügezone. Alternativ oder zusätzlich kann auch eine Vorbehandlung der zweiten Fügezone erfolgen. Als mögliche Vorbehandlung ist beispielsweise das Reinigen mittels eines Lösungsmittels oder eines beispielsweise alkalischen Kunststoffreinigers denkbar. Auch kann eine mechanische Vorbehandlung zum Einsatz kommen, insbesondere mittels Kratzen, Schmirgeln, Bürsten oder Strahlen. Denkbare chemische Vorbehandlungen sind insbesondere das Beizen oder der Einsatz reaktiver Gase. Darüber hinaus könnte sich der Einsatz einer thermischen, chemischen oder/und physikalischen Vorbehandlung als zweckmäßig erweisen, insbesondere mittels Gasflamme oder Plasmabogen. Alternativ oder zusätzlich kann eine elektrische Vorbehandlung mittels Corona-entladung, bei der die erste Fügezone und/oder die zweite Fügezone einer elektrischen Corona-entladung ausgesetzt wird damit an der entsprechenden Oberfläche polare Moleküle entstehen. Eine weitere Möglichkeit ist die Plasmabehandlung, vorzugsweise unter Einsatz einer Plasmadüse für die Vorbehandlung der Fügezone, insbesondere um eine Aktivierung und/oder Reinigung der entsprechenden Oberfläche zu erreichen. Gleichwohl kann sich auch eine Beschichtung mittels Plasma als zweckmäßig erweisen. Eine weitere Möglichkeit ist das Beflammen der Fügezone zur Erhöhung der Oberflächenspannung bei geeigneten Kunststoffen. Eine weitere Art der Vorbehandlung ist die Bestrahlung mittels UV-Strahlen, Elektronenstrahlen, radioaktiven Strahlen oder mittels Laser. Schließlich kann die Vorbehandlung in Form einer Beschichtung erfolgen, insbesondere durch einen Anstrich oder einen Haftvermittler. Denkbar ist auch eine Vorbehandlung des ersten Kunststoffes oder der Fügezonen des ersten Kunststoffes in einem größeren zeitlichen Abstand vor dem Vorwärmen. So ist beispielsweise denkbar, die Vorbehandlung schon im Rahmen des Fertigungsprozesses des ersten Kunststoffes vorzunehmen, um im erfindungsgemäßen Verfahren den vorbehandelten Kunststoff weiterverarbeiten zu können.

Der Auftrag des Primers ist auf unterschiedliche Art und Weise denkbar. Beispielsweise und insbesondere im industriellen Bereich ist der Auftrag mittels einer automatisierten Auftragshilfe, insbesondere mittels eines Dosierroboters denkbar. Selbiger kann dabei mit einem Nadel und/oder einem Höhensensor ausgerüstet sein, um komplexe Dosierungen durchführen zu können. Auch kann der Auftrag des Primers mittels Spritzgießen erfolgen, indem der Primer in einer Spritzgießmaschine plastifiziert und in die der erste Kunststoff mit der ersten Fügezone enthaltende Form unter Druck eingespritzt wird. Alternativ ist ein Folienauftrag denkbar, wobei in einem ersten Schritt mittels Folienblasen oder Flachfolienextrusion zunächst eine Folie aus dem Primer hergestellt wird. Anschließend kann die Folie beispielsweise mittels eines Schneid- oder Stanzverfahrens in eine beliebige Form zugeschnitten und in einem weiteren Schritt nach dem genannten Vorwärmen auf die erste Fügezone aufgebracht werden. Hierbei hat sich der Einsatz von Folien/Platten mit einer Stärke im Bereich von 1 μm - 5000 μm als zweckmäßig erwiesen. Weitere denkbare Auftragsmöglichkeiten sind das Extrusionsschweißen, bei dem der Primer in Form eines Schweißdrahtes vorliegt oder in einem Extruder aufgeschmolzen und in Schmelze auf die erste Fügezone appliziert werden kann. Auch ist die Bereitstellung des Primers in Form eines Schweißdrahtes möglich, um eine Applikation mittels Heißluftschweißen zu ermöglichen. Eine weitere Möglichkeit ist das Aufbringen des Primers mittels eines Sprühverfahrens. Auch beim Aufbringen beim Spritzguss ist eine Vorbehandlung oder/und Vorwärmung und/oder lokal unterschiedliche Temperierung des Spritzgießwerkzeug möglich. Selbstverständlich sind auch andere, dem Fachmann bekannte und sich für den spezifischen Anwendungsfall eignende Auftragsarten denkbar.

Ein weiterer Vorteil ist die weitere Erwärmung oder Erwärmung der ersten Fügezone während des Auftrags des Primers, insbesondere um einen Temperaturabfall der ersten Fügezone zwischen dem Vorwärmen und dem Auftragen des Primers zu vermeiden. Dies kann durch den oben beschriebenen Verfahrensschritt zum Vorwärmen erfolgen, welcher der Einfachheit halber während des Auftrags fortgeführt werden kann. Alternativ oder zusätzlich ist eine zusätzliche Erwärmung insbesondere mittels eines weiteren Verfahrensschrittes möglich. So kann sich beispielsweise als zweckmäßig erweisen, ein simultanes Erwärmen der ersten Fügezone durchzuführen, beispielsweise mittels simultanen Bestrahlens der ersten Fügezone mit Strahlung, erzwungene Konvektion, Kontakterwärmung während des Auftrages, um einen Temperaturabfall der ersten Fügezone nach dem Vorwärmen zu vermeiden.

In einer vorteilhaften Weiterbildung wird der Primer derart aufgebracht, das eine Verbindungsschicht mit einer Dicke im Bereich von 1 $\mu$m bis 5 mm, vorzugsweise im Bereich von 10 $\mu$m bis 3 mm auf der erste Fügezone angeordnet ist. Unter der Dicke der Verbindungsschicht ist dabei die Materialdicke der Verbindungsschicht auf der ersten Fügezone zu verstehen.

Ein weiterer Vorteil ist das Auftragen des Primers mittels einer Dosiervorrichtung auf die erste Fügezone unter Relativbewegung zwischen erster Fügezone und der Dosiervorrichtung, wobei mittels einer Heizvorrichtung die erste Fügezone, auf welche der Primer aufgetragen wird, unter Relativbewegung zwischen erster Fügezone und Heizvorrichtung, vor dem Auftrag des Primers vorgewärmt wird, wobei der Auftrag des Primers über die Dosiervorrichtung im vorgewärmten Zustand der ersten Fügezone erfolgt.

Hierbei hat es sich als besonders vorteilhaft erwiesen, dass die Heizvorrichtung bei der Vorwärmung an der ersten Fügezone mit einer Geschwindigkeit im Bereich von 10 mm/min bis 100 m/min, vorzugsweise im Bereich von 10 mm/min bis 30 m/min vorbeigeführt wird.

Ferner kann es von Vorteil sein, dass die Heizvorrichtung der Dosiervorrichtung vorzugsweise in einem definierten und konstanten Abstand voreilt. Insbesondere ist eine derartige Durchführung des Verfahrens von Vorteil, bei der der Primer mittels einer Dosiervorrichtung auf die erste Fügezone unter Relativbewegung von Dosiervorrichtung und erster Fügezone im Bereich von 10 mm/min bis 100 m/min, vorzugsweise im Bereich von 10 mm/min bis 30 m/min aufgetragen wird, wobei mittels einer Heizvorrichtung besagte Fügezone, auf welche der Primer aufgetragen wird, unter Relativbewegung von Heizvorrichtung und erster Fügezone vor dem Auftrag des Primers vorgewärmt wird, wobei die Heizvorrichtung der Dosiervorrichtung oder einer Düse der Dosiervorrichtung zum Auftragen des Primers in einem zeitlichen Abstand im Bereich von 0,1-10 s vorzugsweise simultan voreilt.

Hierbei hat es sich als besonders vorteilhaft erwiesen, eine Beschichtungseinheit bestehend aus Dosiervorrichtung und Heizvorrichtung einzusetzen. Unter einer Beschichtungseinheit kann dabei insbesondere eine Einheit verstanden werden, die eine feste Verbindung von Heizvorrichtung und Dosiervorrichtung vorsieht, so dass die Heizvorrichtung der Dosiervorrichtung in vorzugsweise einem definierten und konstanten Abstand bei der Relativbewegung voreilt, um sicherzustellen, dass die erste Fügezone unmittelbar vor dem Auftrag des Primers vorgewärmt wird. Selbstverständlich ist hierbei auch eine Einstellbarkeit des Abstandes oder bei konvektiver Vorwärmung das Einstellen des Volumenstroms bzw. Düsendurchmessers des Mediums, insbesondere durch geeignete mechanische, elektromechanische oder auch pneumatisch betriebene Stellmittel denkbar.

Andererseits kann unter der Beschichtungseinheit auch eine Heizvorrichtung und eine Dosiervorrichtung als zwei völlig voneinander getrennte oder separierte Baugruppen verstanden werden, die jedoch die gleiche oder im Wesentlichen die gleiche Relativbewegung hinsichtlich des Kunststoffes eingehen, um sicherzustellen, dass der Auftragsort des Primers unmittelbar vor dem Auftrag des Primers vorgewärmt wird.

In einer vorteilhaften Weiterbildung gehen Heizvorrichtung und Dosiervorrichtung eine zwar im Wesentlichen gleiche primäre Relativbewegung oder Grundrichtung hinsichtlich des Kunststoffes ein, jedoch erfährt zumindest eine von beiden genannten Vorrichtungen zusätzlich zur besagten primären Relativbewegung eine zusätzliche Relativbewegung hinsichtlich des Kunststoffes. So kann beispielsweise die Heizvorrichtung und/oder die Dosiervorrichtung neben der primären Relativbewegung, in der beispielsweise auch der Auftrag des Primers erfolgen kann, eine oder mehrere sekundäre Relativbewegungen eingehen. Beispielsweise kann insbesondere die Heizvorrichtung und/oder die Dosiervorrichtung eine um die primäre Relativbewegung kreisende oder mäanderförmige sekundäre Relativbewegung eingehen oder erfahren.

Dabei kann der Kunststoff auf der einen Seite oder die Heizvorrichtung und Dosiervorrichtung oder beide Vorrichtungen zusammen als Beschichtungseinheit auf der anderen Seite bewegt werden. Dabei ist es möglich, dass die Heizvorrichtung und Dosiervorrichtung oder beide Vorrichtungen zusammen als Beschichtungseinheit auf der einen Seite bzw. der Kunststoff auf der anderen Seite stillstehen oder jeweils mit dem sich bewegenden Teil in abweichende Richtung bewegt werden.

In einer vorteilhaften Weiterbildung erfolgt eine primäre Relativbewegung in einer Geschwindigkeit in einem Bereich von 10 mm/min bis 100 m/min, vorzugsweise im Bereich von 10 mm/min bis 30 m/min, so dass beispielsweise insbesondere auch durch geeignete Gestaltung der Heizvorrichtung möglichst kurze Verweilzeiten des Kunststoffes innerhalb der Heizfläche der Heizvorrichtung ergeben, insbesondere in einem Bereich von 1-60 s. Hierunter kann der Bereich bzw. der Raum um die Heizvorrichtung verstanden werden, der einen Einfluss auf die Temperatur im Sinne einer Temperaturerhöhung, also einer Vorwärmung der ersten Fügezone des ersten Kunststoffes hat. So kann beispielsweise eine zu große Aufheizung und eine Kunststoffschädigung oder Kunststoffbeeinträchtigung vermieden werden.

Zudem kann es sich als vorteilhaft erweisen, insbesondere zur Anbindung der Dosiervorrichtung und/oder der Heizvorrichtung an/in bestehende Fertigungslinien, die Heizvorrichtung mit einer Busschnittstelle auszustatten, insbesondere eines Profibus, oder einer Realtime-Ethernet-Schnittstelle.

Nach dem Aufbringen besagten Primers ist vorgesehen, die zweite Fügezone mit der Primerschicht in Kontakt zu bringen. Hierbei kann sich eine Fixierung beider Kunststoffe zueinander als zweckmäßig erweisen, insbesondere mittels dem Fachmann bekannter Spannvorrichtungen oder ähnlicher Hilfsmittel zur Fixierung.

Natürlich kann optional vor dem Schritt des In-Kontakt-Bringens der zweiten Fügezone mit der Primerschicht eine Vorbehandlung der zweiten Fügezone erfolgen. Dabei sind insbesondere alle oberhalb beschriebenen Techniken für eine Vorbehandlung denkbar. Denkbar ist auch eine Vorbehandlung des zweiten Kunststoffes oder der Fügezonen des zweiten Kunststoffes in einem größeren zeitlichen Abstand vor dem In-Kontakt-Bringen. So ist beispielsweise denkbar, die Vorbehandlung schon im Rahmen des Fertigungsprozesses des zweiten Kunststoffes vorzunehmen, um im erfindungsgemäßen Verfahren einen vorbehandelten Kunststoff weiterverarbeiten zu können. Die Vorbehandlung des zweiten Kunststoffes kann auch den Auftrag des Primers auf die zweite Fügezone beinhalten. Dabei ist vorzugsweise auch eine Vorwärmung der zweiten Fügezone vor dem Auftrag des Primers denkbar. Die obigen Ausführungen sind an dieser Stelle ebenfalls bevorzugt.

Es schließt sich an das oberhalb beschriebene In-Kontankt-bringen von zweiter Fügezone und Primer ein Fügeprozess an, in dem die behandelten und/oder beschichteten Fügepartner durch Wärmezufuhr plastifiziert und vorzugsweise unter Einwirkung von Druck miteinander stoffschlüssig verbunden werden. Denkbar ist für diese stoffschlüssige Verbindung der zweiten Fügezone mit dem Primer der Einsatz einer Wärmezufuhr mittels Wärmeleitung, beispielsweise mittels Heizelementschweissen und/oder Wärmekontaktschweißen und/oder Wärmeimpulsschweißen; durch Reibung, insbesondere Ultraschall-, Reib-/Vibrations- oder Hochfrequenzschweissen; Mikrowellen- oder Induktionsschweißen; durch Konvektion, wie beispielsweise Warmgas- oder Heissgasschweissen; mittels Strahlung, beispielsweise Infrarot-, Laserstumpf- oder Laserdurchstrahlschweissen oder auch durch Kombination zweier oder mehrerer dieser Techniken.

Ein weiterer Gegenstand dieser Erfindung sind gemäß dem erfindungsgemäßen Verfahren hergestellte Gegenstände bzw. Produkte.

Außerdem ist Gegenstand dieser Erfindung die Verwendung eines erfindungsgemäßen Primers zur Verschweißung von einem Polyolefin-Kunststoff mit einem Kunststoff basierend auf mindestens einem Carbonylgruppen-enthaltenden Polymer.

Ausführungsbeispiele

Eingesetzte Materialien und Abkürzungen:

PA = Polyamid

PA 6 = Polycaprolactam

PA 6.6 = Poly-(N,N'-hexamethylenadipinsäurediamid)

PA 12 = Poly-lauryllactam

PA 6.12 = Poly-(hexamethylendodecandiamid)

PPA = Polyphthalamid

PP = Polypropylen

PE = Polyethylen

PET = Polyethylenterephthalat

PBT = Polybutylenterephthalat

MAH = Maleinsäureanhydrid

Primer 1 = PP-MAH mit MFR (230°C;2,16 Kg) = 7-12

Primer 2 = PE-(MD)-MAH mit MFR (190°C;21,6 Kg) = 12-22

Primer 3 = PE-(LD)-MAH mit MFR (190°C;21,6 Kg) = 1,6

Primer 4 = PE-(LLD)-MAH mit MFR (190°C;21,6 Kg) = 2,5

Primer 5 = Terpolymer aus Ethylen, Butylacrylat und Maleinsäureanhydrid

Primer 6 = Terpolymer aus Ethylen, Ethylacrylat und Maleinsäureanhydrid
Primer 7 = Polyolefin; Acrylat- und MAH modifiziert; Mw = 67500 g/mol
Prüfkraftstoff Zusammensetzung:

|  | FAM B in Vol.-% |
|---|---|
| Methanol | 15,00 |
| Wasser | 0,50 |
| Toluol | 42,25 |
| Isooctan | 25,35 |
| Diisobutylen | 12,68 |
| Ethanol | 4,23 |
| Gesamt | 100,00 |

IR: Infrarot-Schweißen; IR-VIB: Infrarot/Vibrations-Schweißen; US: Ultraschallschweißen

Herstellung der Prüfkörper:

Zur Herstellung der Prüfkörper wurden die Primer Polymere 1 bis 4 als auch die zu schweißenden Kunststoffe in der Plastifiziereinheit einer Spritzgießmaschine aufgeschmolzen (230 °C) und zu Platten von 130 mm x 68 mm x 3 mm verarbeitet.

Die Platten wurden mittels IR-Schweißen und Vibrations-Schweißen auf der Fläche von 130 mm x 3 mm mit PE, PP, PA und PPA jeweils der gleichen Fläche auf Stoß geschweißt um die Kompatibilität zu diesen Materialien zu testen. 24 Stunden nach dem Schweißen wurden 8 mm von beiden Seiten der geschweißten Platte abgesägt, die restliche Platte halbiert (Schnitte senkrecht zur Fügeebene) und im Zugversuch mit 5 mm/s Prüfgeschwindigkeit bei Raumtemperatur geprüft.

Die nachfolgende Tabelle gibt jeweils für die Kombination von Primer mit verwendetem Kunststoff und Schweißverfahren an, welche Zugfestigkeit (in MPa) für die verschweißten Probekörper erhalten werden konnten:

| Polymer 1 | Polymer 2 | Primer | Schweißverfahren | Zugfestigkeit MPa |
|---|---|---|---|---|
| PA6 GF30 ULTRAMID B3WG6 | - | PP-MAH | VIB | 12,6 |
| PPA PA6T/6I/66 GF33 Amodel AE-1133NT | - | PP-MAH | VIB | 7,0 |
| PP Moplen HP501 L | - | PP-MAH | VIB | 20,7 |
| PA6 GF30 ULTRAMID B3WG6 | - | PE-(MD)-MAH | VIB | 7,42 |
| PA6 GF30 ULTRAMID B3WG6 | - | PE-(LD)-MAH | VIB | 6,31 |
| PA6 GF30 ULTRAMID B3WG6 | - | PE-(LLD)-MAH | VIB | 5,77 |
| PE Lupolen GX5038 |  | PE-(MD)-MAH | VIB | 12,21 |
| PE Lupolen GX5038 | PA6 GF30 ULTRAMID B3WG6 | - | VIB | 0 |
| PP Moplen HP501L | PA6 GF30 ULTRAMID B3WG6 | - | VIB | <2,5 |
| PP Moplen HP501L | PPA PA6T/6I/66 GF33 Amodel AE-1133NT | - | VIB | <2,5 |

Die Tabelle zeigt ausgezeichnete Festigkeiten des Primers zum PA, PPA und PP. Reines PP und reines PE ohne Primer zeigte nur sehr geringe Festigkeit zum PA und PPA und zerbrach nach dem Schweißen ohne signifikante Krafteinwirkung.

Der Primer wurde in einem mehrkomponenten Spritzgießprozess an Polyamid oder an PE angespritzt werden. Dazu wurden zunächst Polyamid und PE Platten von 150 mm x 66.2 mm x 4 mm spritzgegossen, in eine Kavität von 150 mm x 75 mm x 4 mm eingelegt und das Primerpolymer in einem weiteren Spritzgießprozess an den PA- bzw. PE-Kunststoff angespritzt. Die angespritzte Primerschicht wurde auf 1,8 mm Dicke gefräst. Die Primerschicht wurde mit einem weiteren Kunststoff geschweißt, die geschweißten Platten wie zuvor beschrieben gesägt und geprüft.

Die nachfolgende Tabelle gibt jeweils für die Kombination von Primer mit verwendetem Kunststoff und Schweißverfahren an, welche Zugfestigkeit (in MPa) für die verschweißten Probekörper erhalten werden konnten.

| Polymer 1 | Polymer 2 | Primer | Primer an | Schweiß verfahren | Zugfestigkeit MPa |
|---|---|---|---|---|---|
| PE(HD) Lupolen GX5038BG25 | PA6 GF30 ULTRAMID B3WG6 | PE-(MD)-MAH | PA | IR | 3,66 |
| PE(HD) Lupolen GX5038BG25 | PA6 GF30 ULTRAMID B3WG6 | PE-(MD)-MAH | PA | VIB | 2,80 |
| PE(HD) Lupolen GX5038BG25 | PA12 GF30 Grilamid LV-3A H | PE-(MD)-MAH | PA | IR | 5,76 |
| PE(HD) Lupolen GX5038BG25 | PA12 GF30 Grilamid LV-3A H | PE-(MD)-MAH | PA | VIB | 4,47 |
| PE(HD) Lupolen GX5038BG25 | PA6 GF30 ULTRAMID B3WG6 | - | PA | IR | 0 |
| PE(HD) Lupolen GX5038BG25 | PA6 GF30 ULTRAMID B3WG6 | - | PA | VIB | 0 |
| PE(HD) Lupolen GX5038BG25 | PA12 GF30 Grilamid LV-3A H | - | PA | IR | 0 |
| PE(HD) Lupolen GX5038BG25 | PA12 GF30 Grilamid LV-3A H | - | PA | VIB | 0 |
| PE(HD) Lupolen GX5038BG25 | PPA PA6T/6I/66 GF33 Amodel AE-1133NT | - | - | IR | 0 |
| PE(HD) Lupolen GX5038BG25 | PPA PA6T/6I/66 GF33 Amodel AE-1133NT | - | - | VIB | 0 |
| PE(HD) Lupolen GX5038BG25 | PPA PA6T/6I/66 GF33 Amodel AE-1133NT | PE-(MD)-MAH | PE | IR | 5,18 |
| PE(HD) Lupolen GX5038BG25 | PPA PA6T/6I/66 GF33 Amodel AE-1133NT | PE-(MD)-MAH | PE | VIB | 9,17 |
| PE(HD) Lupolen GX5038BG25 | PPA PA6T/6I/66 GF33 Amodel AE-1133NT | PE-(MD)-MAH | PE und PPA | IR | 8,98 |
| PE(HD) Lupolen GX5038BG25 | PPA PA6T/6I/66 GF33 Amodel AE-1133NT | PE-(MD)-MAH | PE und PPA | VIB | 7,80 |
| PE(HD) Lupolen GX5038BG25 | PPA PA6T/6I/66 GF33 Amodel AE-1133NT | PE-(MD)-MAH | PPA | IR | 9,02 |
| PE(HD) Lupolen GX5038BG25 | PPA PA6T/6I/66 GF33 Amodel AE-1133NT | PE-(MD)-MAH | PPA | VIB | 8,86 |

Die mit Primerschicht geschweißten Kunststoffe zeigten ausgezeichnete Festigkeit. Ohne Primer zerbrachen die Kunststoffe nach dem Schweißen ohne signifikante Krafteinwirkung.

Alterung der geschweißten Kunststoffe:

In der nachfolgenden Tabelle sind die verwendeten Polymere und die zugehörigen Primer aufgezeigt. VIB-geschweißt wurden Primerpolymer-Platten sowie auf einem Kunststoff im mehrkomponenten Spritzgießprozess aufgebrachter Primer mit einem weiteren Kunststoff, entsprechend den oben beschriebenen Verfahren. Gealtert wurde bei Raumtemperatur, in Prüfkraftstoff FAM-B, sowie in zwei verschiedenen Klimawechseltests. In der Tabelle sind die erhaltenen Zugfestigkeiten bei Raumtemperatur mit einer Zuggeschwindigkeit von 5 mm/s in MPa aufgeführt.

| Polymer 1 | Polymer 2 | Primer / an Kunststoff | Schweißverfahren | Lagerung | Zugfestigkeit MPa |
|---|---|---|---|---|---|
| PA6 GF 30 Ultramid B3WG6 | PE Lupolen GX5038 | - | VIB | 24 h 20°C | 0,00 |
| PA6 GF 30 Ultramid B3WG6 | PE Lupolen GX5038 | PE-(MD)-MAH / PA6 | VIB | 24 h 20°C | 7,42 |
| PA6 GF 30 Ultramid B3WG6 | PE Lupolen GX5038 | PE-(MD)-MAH / PA6 | VIB | 14 Tage in FAM-B | 6,08 |

| PE Lupolen GX5038 | - | PE-(MD)-MAH | VIB | 24 h 20°C | 15,83 |
|---|---|---|---|---|---|
| PE Lupolen GX5038 | - | PE-(MD)-MAH | VIB | 80 h (10 Zyklen) Klimawechsel von -40°C bis 70°C | 16,45 |
| PPA PA6T/6I/66 GF33 Amodel AE-1133NT | - | PE-(MD)-MAH | VIB | 24 h 20°C | 9,06 |
| PPA PA6T/6I/66 GF33 Amodel AE-1133NT | - | PE-(MD)-MAH | VIB | 80 h (10 Zyklen) Klimawechsel von -40°C bis 70°C | 7,49 |
| PPA PA6T/6I/66 GF33 Amodel AE-1133NT | PE Lupolen GX5038 | PE-(MD)-MAH / PPA | VIB | 24 h 20°C | 9,02 |
| PPA PA6T/6I/66 GF33 Amodel AE-1133NT | PE Lupolen GX5038 | PE-(MD)-MAH / PPA | VIB | 80 h (10 Zyklen) Klimawechsel von -40°C bis 70°C | 2,37 |
| PA6 GF 30 Ultramid B3WG6 | - | PE-(MD)-MAH | IR | 24 h 20°C | 8,04 |
| PA6 GF 30 Ultramid B3WG6 | - | PE-(MD)-MAH | IR | 140 h (35 Zyklen) Klimawechsel von -30°C to 80°C | 6,62 |
| PA6 GF 30 Ultramid B3WG6 | - | PE-(MD)-MAH | IR | 14 Tage in FAM-B | 6,08 |
| PA12 GF30 Grilamid LV3AH | - | PE-(MD)-MAH | IR | 24 h 20°C | 9,11 |

| PA12 GF30 Grilamid LV3AH | - | PE-(MD)-MAH | IR | 140 h (35 Zyklen) Klimawechsel von -30°C to 80°C | 8,13 |
|---|---|---|---|---|---|

Die geschweißten Kunststoffe mit Primer zeigten ausgezeichnete Alterungsbeständigkeit in den verwendeten Testmedien und -bedingungen.

Terpolymere als Primer:

In einem weiteren Verfahren wurden die Primer 5 (Terpolymer aus Ethylen, Butylacrylat und Maleinsäureanhydrid) und Primer 6 (Terpolymer aus Ethylen, Ethylacrylat und Maleinsäureanhydrid) getestet. Primer 5 wurde in einer Heizpresse bei 220 °C zu eine Folie von 0,5 mm Dicke gepresst, auf PE mittels Warmgas aufgeschmolzen und mit PA IR-VIB geschweißt. Primer 6 wurde bei 280 °C aufgeschmolzen und mittels Heizelementschweißen mit PE und PA geschweißt.

Die nachfolgende Tabelle gibt jeweils für die Kombination von Primer mit verwendetem Kunststoff und Schweißverfahren an, welche Zugfestigkeit (in MPa) für die verschweißten Probekörper erhalten werden konnten:

| Polymer 1 | Polymer 2 | Primer | Schweißverf ahren | Zugfestigkeit MPa |
|---|---|---|---|---|
| PE(HD) Lupolen GX5038BG25 | PA6 GF30 Durethan | Primer 5 | IR-VIB | 7,47 |
| PE(HD) Lupolen GX5038BG25 | PA6 GF30 Durethan | - | IR-VIB | 0 |
| PE(HD) Lupolen GX5038BG25 | PA6 GF30 Durethan | Primer 6 | Heizelement | 3-4 |
| PE(HD) Lupolen GX5038BG25 | PA6 GF30 Durethan | - | Heizelement | 0 |

Die mit Primerschicht geschweißten Kunststoffe zeigten ausgezeichnete Festigkeit. Ohne Primer zerbrachen die Kunststoffe nach dem Schweißen ohne signifikante Krafteinwirkung.

Heizelementschweißen von PET und PBT mit Polymerprimer 1 und 7:

Bei 310°C wurden PP für 20 s und PET für 15 s bzw. PBT für 30 s auf der Fläche von 30 mm x 4 mm auf der Heizplatte aufgeschmolzen, beide zu fügende Kunststoffe in eine Schmelze des Primerpolymers getaucht und die Primer beschichteten Polymere mit leichtem Druck gefügt.

Verwendet wurden dazu die Primerpolymere 1 und 7. Nach 24 Stunden bei Raumtemperatur wurden die geschweißten Proben in einer Zugprüfmaschine mit einer Prüfgeschwindigkeit von 5 mm/s bei Raumtemperatur geprüft. Die Polymerkombinationen und das verwendete Primerpolymer sind mit den zugehörigen Zugfestigkeiten in der nachfolgenden Tabelle dargestellt.

| Polymer 1 | Polymer 2 | Primerpolymer | Zugfestigkeit in MPa |
|---|---|---|---|
| PP Hostacom M4N01 | PET Genius 72 | - | 3,43 |
| | | 1 | 6,44 |
| | | 7 | 6,33 |
| PP Hostacom M4N01 | PBT GF20 Pocan B3225 | - | 1,19 |
| | | 1 | 4,48 |
| | | 7 | 3,87 |

Es konnten gute Festigkeiten der geschweißten Proben mit den angegebenen Primerpolymeren erhalten werden. Ohne Primer wiesen die Heizelement geschweißten Proben nur geringe Festigkeit auf.

**Patentansprüche**

1. Verfahren zum Verschweißen von einem Polyolefin-Kunststoff mit einem Kunststoff basierend auf mindestens einem Carbonylgruppen-enthaltenden Polymer unter Verwendung eines Primers, wobei der Primer, bezogen auf den Polymeranteil des Primers, mindestens 20 Gew.-% mindestens eines Polymeres enthält, welches Maleinsäureanhydrid- oder Maleinsäureanhydrid-Derivat-Einheiten umfasst.

2. Verfahren zum Verschweißen nach Anspruch 1, **dadurch gekennzeichnet, dass** der Polyolefin-Kunststoff ausgewählt wird aus der Gruppen von Polyethylen-Kunststoff, insbesondere HD-Polyethylen-, MD-Polyethylen-, LD-Polyethylen-, UHMW-Polyethylen- oder LLD-Polyethylen-Kunststoff, und Polypropylen-Kunststoff.

3. Verfahren zum Verschweißen nach einem der Ansprüche 1 oder 2, **dadurch gekennzeichnet, dass** der Kunststoff basierend auf mindestens einem Carbonylgruppen-enthaltenden Polymer ausgewählt wird aus einem Polyester-Kunststoff, insbesondere einem Polyterephthalatester-Kunststoff, oder einem Polyamid-Kunststoff.

4. Verfahren zum Verschweißen nach einem der Ansprüche 1 bis 3, **dadurch gekennzeichnet, dass** das mindestens eine Polymer des Primers ausgewählt ist aus der Gruppe von Copolymeren aus mindestens einem Maleinsäureanhydrid-Monomer und mindestens einem Acrylat- und/oder alpha-Olefin-Monomer und Maleinsäureanhydrid gepfropften Polyolefinen.

5. Verfahren zum Verschweißen nach einem der Ansprüche 1 bis 4, **dadurch gekennzeichnet, dass** das mindestens eine Polymer des Primers einen Maleinsäureanhydrid-Gehalt von 0,01 - 35 Gew.-%, insbesondere 0,02 - 25 Gew.-%, bevorzugt 0,05 - 20 Gew.-%, besonders bevorzugt 0,05 - 15 Gew.-% bezogen auf das Polymer aufweist.

6. Verfahren zum Verschweißen nach einem der Ansprüche 1 bis 5, **dadurch gekennzeichnet, dass** das mindestens eine Polymer des Primers ein gewichtsmittleres Molekulargewicht Mw im Bereich von 5000 - 2000000 g/mol, insbesondere von 50000 - 1000000 g/mol, bevorzugt von 100000 - 500000 g/mol aufweist.

7. Verfahren zum Verschweißen nach einem der Ansprüche 1 bis 6, **dadurch gekennzeichnet, dass** der Primer neben dem ersten Polymer mindestens ein weiteres Polymer enthält, welches zu mindestens einem der beiden zu verschweißenden Kunststoffe kompatibel ist, bevorzugt mindestens ein Polyamid-Polymer und/oder ein Polyolefin-Polymer.

8. Verfahren zum Verschweißen nach einem der Ansprüche 1 bis 7, **dadurch gekennzeichnet, dass** der Primer mindestens ein Lösungsmittel, insbesondere Wasser enthält, wobei der Primer vorzugsweise einen Lösungsmittelgehalt von 10 - 95 Gew.-%, insbesondere 50 - 85 Gew.-%, besonders bevorzugt 60 - 80 Gew.-%, jeweils bezogen auf das Gesamtgewicht des Primers, aufweist.

9. Gegenstand hergestellt nach einem Verfahren zum Verschweißen gemäß einem der Ansprüche 1-8.

10. Verwendung eines Primers gemäß einem der Ansprüche 1 - 8 zur Verschweißung von einem Polyolefin-Kunststoff mit einem Kunststoff basierend auf mindestens einem Carbonylgruppen-enthaltenden Polymer.

Europäisches
Patentamt

European
Patent Office

Office européen
des brevets

**EUROPÄISCHER RECHERCHENBERICHT**

Nummer der Anmeldung

EP 15 19 0210

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2005 056286 A1 (DEGUSSA [DE]) 31. Mai 2007 (2007-05-31) * Absatz [0066] * * Absatz [0074]; Ansprüche 1-4,8,9 * ----- | 1-10 | INV. B29C65/00 C08J5/12 |
| X | WO 2008/113821 A1 (FEICHTINGER REINHARD [DE]; AMESOEDER SIMON [DE]) 25. September 2008 (2008-09-25) * Seite 5 * * Seite 12, Zeile 30 - Seite 13, Zeile 34; Ansprüche 29-36,38,39 * ----- | 1-10 | ADD. B29K23/00 B29K67/00 B29K77/00 |
| A | WO 2005/018915 A1 (DU PONT [US]; KOSHIDA REIKO [JP]) 3. März 2005 (2005-03-03) * Ansprüche 1-3; Beispiele 1-3 * ----- | 1-10 | |
| A | HUIXIA LIU ET AL: "Study on Welding Mechanism Based on Modification of Polypropylene for Improving the Laser Transmission Weldability to PA66", MATERIALS, Bd. 8, Nr. 8, 4. August 2015 (2015-08-04), Seiten 4961-4977, XP55262640, DOI: 10.3390/ma8084961 * das ganze Dokument * ----- | 1-10 | |
| A | LU C ET AL: "Weld line morphology and strength of polystyrene/polyamide-6/poly(styrene-co-maleic anhydride) blends", EUROPEAN POLYMER JOURNAL, PERGAMON PRESS LTD. OXFORD, GB, Bd. 40, Nr. 11, November 2004 (2004-11), Seiten 2565-2572, XP004582877, ISSN: 0014-3057, DOI: 10.1016/J.EURPOLYMJ.2004.06.016 * das ganze Dokument * ----- | 1-10 | |

RECHERCHIERTE SACHGEBIETE (IPC)

B29C
B29K
C08J

Der vorliegende Recherchenbericht wurde für alle Patentansprüche erstellt

| Recherchenort | Abschlußdatum der Recherche | Prüfer |
|---|---|---|
| München | 15. April 2016 | Espen, Josée |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 19 0210

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-04-2016

| Im Recherchenbericht angeführtes Patentdokument | Datum der Veröffentlichung | Mitglied(er) der Patentfamilie | | Datum der Veröffentlichung |
|---|---|---|---|---|
| DE 102005056286 A1 | 31-05-2007 | CA | 2630660 A1 | 31-05-2007 |
| | | CN | 1970277 A | 30-05-2007 |
| | | DE | 102005056286 A1 | 31-05-2007 |
| | | EP | 1954473 A1 | 13-08-2008 |
| | | JP | 5156639 B2 | 06-03-2013 |
| | | JP | 2009517240 A | 30-04-2009 |
| | | TW | I392581 B | 11-04-2013 |
| | | US | 2008217821 A1 | 11-09-2008 |
| | | WO | 2007060032 A1 | 31-05-2007 |
| WO 2008113821 A1 | 25-09-2008 | AT | 498649 T | 15-03-2011 |
| | | DE | 102007013472 A1 | 25-09-2008 |
| | | EP | 2129708 A1 | 09-12-2009 |
| | | US | 2011056966 A1 | 10-03-2011 |
| | | WO | 2008113821 A1 | 25-09-2008 |
| WO 2005018915 A1 | 03-03-2005 | AT | 556836 T | 15-05-2012 |
| | | CA | 2535956 A1 | 03-03-2005 |
| | | CN | 1839031 A | 27-09-2006 |
| | | EP | 1658170 A1 | 24-05-2006 |
| | | JP | 2007503339 A | 22-02-2007 |
| | | US | 2005048290 A1 | 03-03-2005 |
| | | WO | 2005018915 A1 | 03-03-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CHARLES M. HANSEN.** Hansen Solubility Parameters: A User's Handbook. Taylor & Francis Group, 2007